# EUROPÄISCHE PATENTANMELDUNG

(11) **EP 0 892 202 A1**
(43) Veröffentlichungstag der Anmeldung: **20.01.1999**
(21) Anmeldenummer: 98112806.9
(22) Anmeldetag: 10.07.1998
(51) Int. Cl.: F16K 31/06, F16K 15/02

(54) **Koaxialventil mit Rückschlagventil**

(30) Priorität: 10.07.1997 DE 19729553
(71) Anmelder: AWS Apparatebau Arnold GmbH, 74214 Sindeldorf (DE)
(72) Erfinder: Arnold, Willi, 74676 Niedernhall (DE)
(74) Vertreter: Lenzing, Andreas, Dr.

(57) **Zusammenfassung**

Die Erfindung betrifft ein Koaxialventil (1) mit einem in axialer Richtung beweglich gelagerten Ventilstellglied (4), wobei eine elektrische Spule (7) das Ventilstellglied (4) mittels ihres Magnetfeldes verstellt oder das Ventilstellglied pneumatisch oder mechanisch verstellt wird, wobei hinter oder in der Auslaßseite (3) des Koaxialventils (1) ein Rückschlagventil (30) angeordnet ist, welches in Richtung (P_{G}) des Koaxlialventils (1) sperrt.

## Beschreibung

Die Erfindung betrifft ein Koaxialventil mit einem in axialer Richtung beweglich gelagerten Ventilstellglied, wobei eine elektrische Spule das Ventilstellglied mittels ihres Magnetfeldes verstellt oder das Ventilstellglied pneumatisch oder mechanisch verstellt wird.

Koaxialventile werden überall dort eingesetzt, wo hohe Drücke herrschen, und wo eine direkt Steuerung des Ventils gefordert ist. Durch das koaxial in einer Zylinderspule einliegende Ventilstellglied, ist eine direkte Steuerung über die Stromstärke der Zylinderspule möglich. Das Ventilstellglied ist meist ein Rohr, welches als Anker in der Zylinderspule teilweise einliegt, wobei beim Anlegen einer Spannung an die Spule ein Magnetfeld derart aufgebaut wird, daß der Anker in die Spule hineingezogen wird, wodurch das Innenrohr des Ventilstellgliedes, durch das das gesonderte Medium strömt, gegen einen koaxial angeordneten Ventilsitz mit seiner Stirnseite gedrückt wird, wodurch ein Durchfluß zwischen der Stirnseite des Innenrohres und dem Ventilsitz nicht mehr möglich ist. Das Ventil sperrt. Es ist jedoch auch möglich, daß das Koaxialventil im stromlosen Zustand sperrt, wobei dann eine Feder das Ventilstellglied gegen den Ventilsitz abdichtend drückt. Das Magnetfeld der Spule dient in diesem Fall zur Öffnung des Ventils. Problematisch bei Koaxialventilen ist, daß durch einen plötzlich aufgebauten Gegendruck an der Koaxialventilauslaßseite, das heißt hinter dem Ventilsitz, das Koaxialventil versehentlich geöffnet werden kann. Zur Vermeidung diese Prolbems ist es möglich, die Feder oder das Magnetfeld und damit die verwendete Spule zu vergrößern, was jedoch größere Außenabmessungen und einen aufwendigeren Aufbau des Ventils und zudem höhere Materialkosten bedingt.

Aufgabe der Erfindung ist es daher, bestehende Koaxialventile dahingehend zu verbessern, daß ein versehentliches Öffnen des Ventils bei einem zu hohen Gegendruck auf der Ventilauslaßseite verhindert wird.

Die Aufgabe wird erfinderisch dadurch gelöst, daß hinter oder in der Auslaßseite des Koaxialventils ein Rückschlagventil angeordnet ist, welches in Richtung des Koaxialventils sperrt. Hierdurch wird vorteilhaft verhindert, daß bei einem aufgebauten Gegendruck dieser nicht das Ventilstellglied entgegen der Durchlaßrichtung aufdrücken kann, da vorher das Rückschlagventil sperrt, so daß sich zwischen dem Rückschlagventil und dem Ventilsitz des Koaxialventils kein hoher Druck aufbauen kann. Ein versehentliches Öffnen des Koaxialventils ist somit ausgeschlossen. Bei der erfinderischen Lösung wird zudem vorteilhaft keine größere Spule oder Feder zur Verhinderung des Öffnens bei einem Auftretenden Gegendruck benötigt.

Die erfindungsgemäße Lösung kann vorteilhaft bei allen bestehenden Koaxialventilarten und -bauformen eingesetzt werden. Auch kann jedes beliebige Rückschlagventil, welches für die entsprechenden Drücke und Medien ausgelegt ist, eingesetzt werden.

Es hat sich gezeigt, daß es bei hohen Betriebsdrücken besonders vorteilhaft ist, wenn im Rückschlagventil das Ventilstellglied mittels einer Feder entgegen der Durchflußrichtung in Richtung der Koaxialventilauslaßseite druckbeaufschlagt wird. Hierdurch ist stets gewährleistet, daß auch bei einem Druckgleichgewicht zwischen der Einlaß- und Auslaßseite des Rückschlagventils das Rückschlagventil sperrt. Der aufgebaute Gegendruck kann sich dann nicht weiter in Richtung des Koaxialventils fortpflanzen.

Vorteilhaft besitzt das Rückschlagventil einen Ventilsitz, der eine zylinderförmige Hülse ist, durch die das gesamte Medium strömt, und gegen deren eine Stirnseite das insbesondere scheibenförmige Verstellglied des Rückschlagventils im Sperrzustand bzw. geschlossenem Zustand abdichtend anliegt. Die zylinderförmige Hülse wird dabei vorteilhaft außen von einem topfförmigen Teil umfaßt, wobei das scheibenförmige Verstellglied und die das Ventilstellglied druckbeaufschlagende Feder im topfförmigen Teil angeordnet sind, wobei sich die Feder mit ihrer einen Seite gegen den Topfboden abstützt und mit ihrer anderen Seite am Ventilstellglied anliegt. Damit das Medium, welches von dem Koaxialventil in die zylinderförmige Buchse strömt, zum Aulaß des Rückschlagventils gelangen kann, hat das topfförmige Teil an seinen zylinderischen Seitenwänden insbesondere schlitzförmige Öffnungen. Baut sich bei sperrendem Koaxialventil ein Gegendruck auf, so strömt das Medium von der Auslaßseite des Rückschlagventils an der Außenwand des topfförmigen Teils entlang und dringt durch die Öffnungen der zylindrischen Wand des Topfes zur Einlaßseite des Rückschlagventils. Gleichzeitig gelangt durch eine Öffnung im Topfboden das Medium in den Topf selbst und drückt das Ventilstellglied zusammen mit der Federkraft der im Topf einliegenden Druckfeder gegen den buchsenförmigen Ventilsitz, so daß das Rückschlagventil sperrt.

Das Rückschlagventil kann vorteilhaft in einem Stutzen angeordnet sein, der beliebig an dem Auslaßstutzen des Koaxialventils befestigbar ist. Es kann jedoch auch im Koaxialventilgehäuse selbst angeordnet sein.

Nachfolgend wird eine erfindungsgemäße Ausführungsform der Erfindung anhand von Figuren näher erläutert.

Es zeigen:
- Figur 1:: ein Koaxialventil gemäß dem Stand der Technik;
- Figur 2:: ein Rückschlagventil gemäß der Erfindung;
- Figur 3:: das Rückschlagventil in geöffneter Stellung;
- Figur 4:: das Rückschlagventil im Sperrzustand.

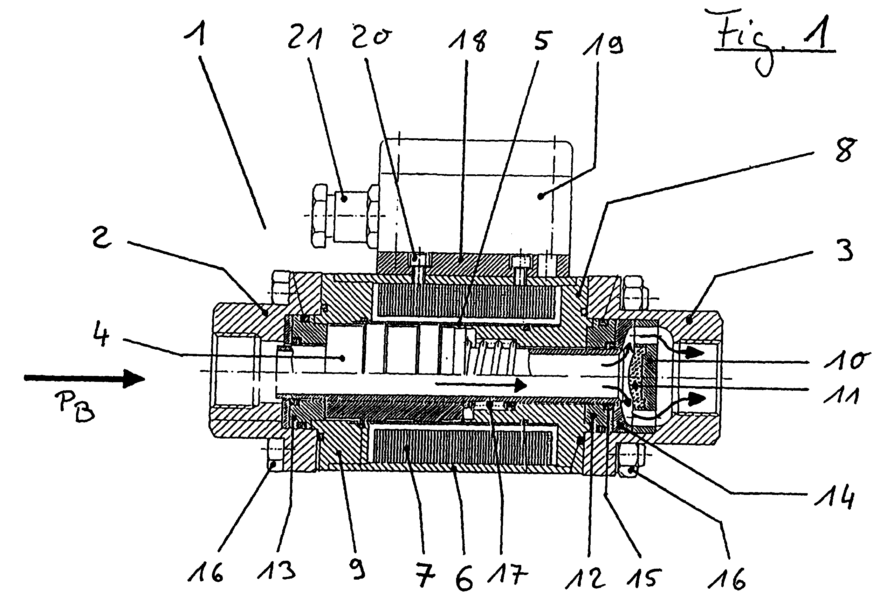

Die Figur 1 zeigt ein Koaxialventil gemäß dem Stand der Technik. Das Koaxialventil 1 hat einen Einlaß- 2 und einen Auslaßstutzen 3, welche mit Rohren verschraubbar sind. In dem Koaxialventil 1 ist das Stellglied 4 in axialer Richtung verschiebbar gelagert und liegt teilweise in der Zylinderspule 7 ein. Zwischen dem Einlaß- 2 und Auslaßstutzen 3 ist das Magnetgehäuse 6 sowie der seitliche Polkern 8 und der Magnetdeckel 9 angeordnet. Die Zylinderspule 7 ist mittels des Innenrohres 5 von dem Stellglied 4 getrennt. Die Durchflußrichtung ist durch den Pfeil P_{B} gekennzeichnet. Die Spule 7 ist über das Anschlußgehäuse 19 und dem Stecker 21 mit der elektrischen Steuer- bzw. Regeleinheit in Verbindung. Das Anschlußgehäuse 19 ist mittels Befestigungsschrauben 20 an einem Sockel 18 am Koaxialventilgehäuse befestigt. Die Figur 1 zeigt das Koaxialventil 1 in geöffneter Stellung, so daß das Medium entlang der eingezeichneten Pfeile durch das Stellglied 4, welches innen als Rohr ausgebildet ist, strömen kann. Der Ventilsitz 10, 11 ist koaxial angeordnet und wird von dem Medium, welches aus dem Stellglied 4 austritt, umströmt. Im nicht dargestellten Sperrzustand des Koaxialventils 1 wird durch das Magnetfeld der Zylinderspule 7 das Stellglied 4 nach rechts in Richtung des Ventilsitzes 10 entgegen dem Federdruck der Druckfeder 17 verstellt. Hierdurch liegt die Stirnseite gegen das Dichtungselement 11 des Ventilsitzes 10 abdichtend an, so daß das Medium nicht mehr vom Einlaßstutzen 2 zum Auslaßstutzen 3 gelangen kann.

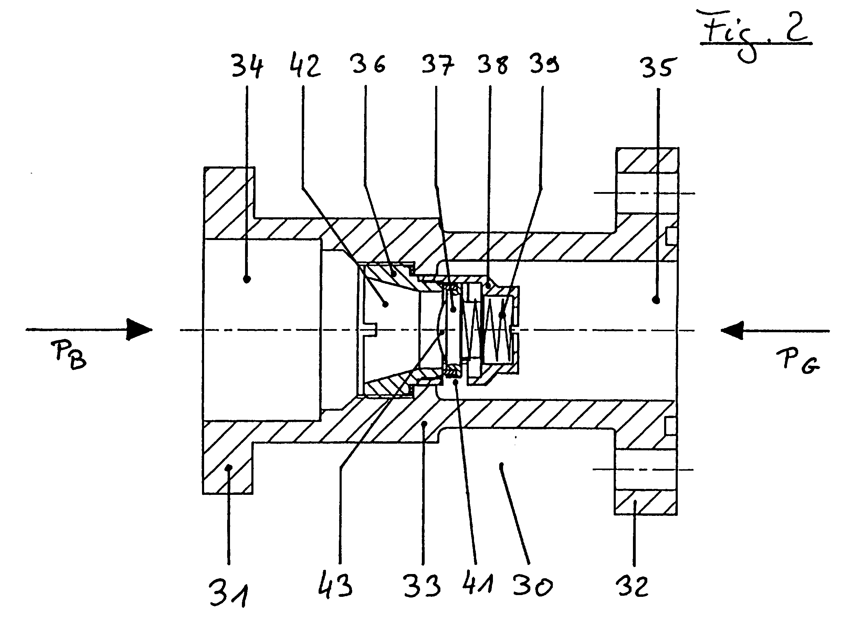

Am Auslaßstutzen 3 des Koaxialventils 1 ist das in Figur 2 dargestellte Rückschlagventil 30 mittels nicht dargestellter Befestigungsschrauben oder über Schraubgewinde befestigbar, so daß das Medium direkt vom Auslaßstutzen 3 des Koaxialventils 1 in die Einlaßöffnung 34 des Einlaßstutzens 31 des Rückschlagventils 30 gelangt. Das Rückschlagventil 30 besteht aus einem Gehäuse 33, an das seitlich der Einlaßstutzen 31 und der Auslaßstutzen 32 angeformt ist. Im Gehäuse 33 ist eine Hülse 36 eingeschraubt, welche wiederum ein topfförmiges Teil 38 hält. Im topfförmigen Teil 38 liegt das Stellglied 37 des Rückschlagventils 30 ein und ist in axialer Richtung verschiebbar gelagert.

Eine Druckfeder 39 druckbeaufschlagt das Stellglied 37 in Richtung des Einlaßstutzens 31. Dies hat zur Folge, daß bei einem Druckgleichgewicht zwischen dem Einlaß- 31 und dem Auslaßstutzen 32 das Rückschlagventil 30 schließt. Sollte sich in diesem Zustand der Gegendruck im Auslaßstutzen 32 erhöhen, kann er sich nicht in Richtung des Einlaßstutzens 31 fortpflanzen.

Die Figur 2 zeigt das Rückschlagventil 30 in geschlossener Stellung. Das topfförmige Teil 38 ist mit seinen zylindrischen Seitenwänden 38a auf die Hülse 36 aufgeschraubt und wird von dieser in Position gehalten. Im zylindrischen Teil des Topfes 38 gleitet das Stellglied 37 in axialer Richtung an den Innenwänden des Topfes 38 entlang. Die Druckfeder 39 stützt sich mit ihrer einen Seite am Topfboden 38b und mit ihrer anderen Seite am Stellglied 37 ab. Die Druckfeder 39 umfaßt dabei einen Vorsprung 40, welcher auch als Führungssockel bezeichnet werden kann. Durch den Führungssockel ist gewährleistet, daß das Stellglied 37 im Topf 38 nicht verkanten kann.

Die zylindrischen Wände 38a des topfförmigen Teils 38 haben seitliche Öffnungen 41, durch die das Medium bei geöffneter Ventilstellung von der Einlaßöffnung 34 hin zur Auslaßöffnung 35 gelangen kann.

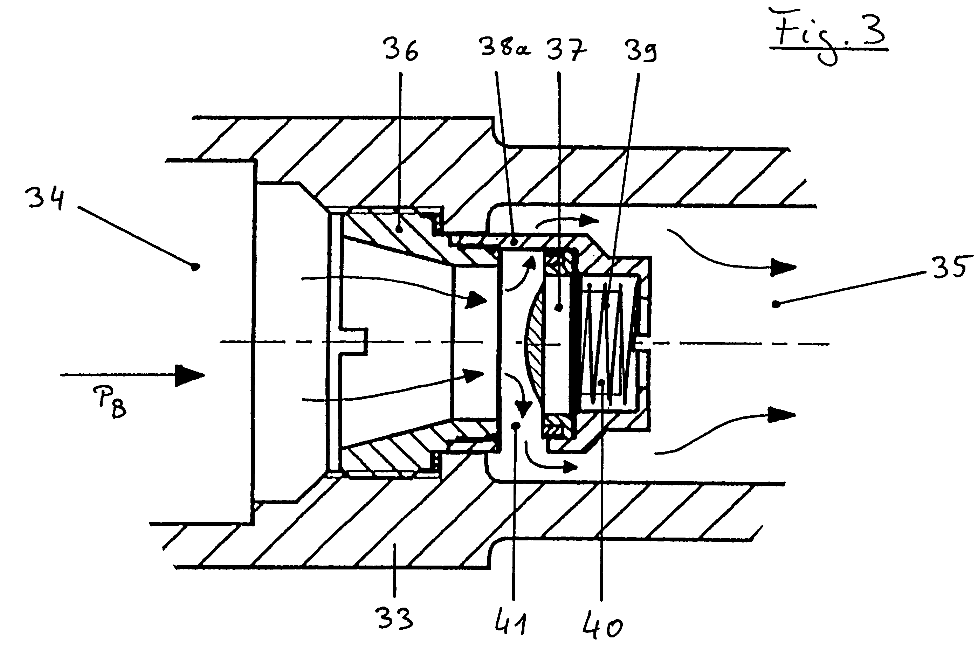

Die Figur 3 zeigt das Rückschlagventil 30 in geöffneter Stellung. Die Federkraft der Druckfeder 39 ist so zu dimensionieren, daß bei einem normalen Betriebsdruck P_{B} das Medium das Stellglied 37 entgegen der Federkraft in die geöffnete Position wegdrückt.

Das Stellglied 37 hat, wie aus Figur 3 ersichtlich, an seiner der Einlaßöffnung 34 zugewandten Seite eine Wölbung, welche entweder kugelförmig oder konvex gestaltet sein kann. Durch diese Form wird das durch die Hülse 36 strömende Medium in radiale Richtung abgelenkt, so daß es durch die Öffnungen 41 der zylindrischen Wände 38a des topfförmigen Teils 38 treten kann, ohne daß Turbulenzen auftreten.

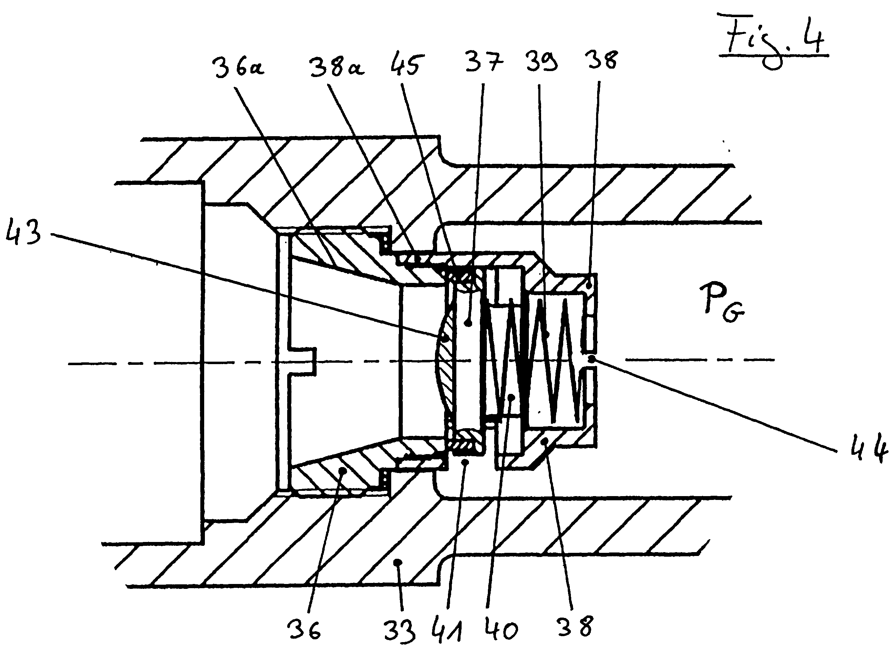

Die Figur 4 zeigt das Rückschlagventil in gesperrtem Zustand. Hierbei ist zu beachten, daß das nicht dargestellte Koaxialventil 1 ebenfalls geschlossen ist. Sollte der Gegendruck P_{G} Null sein, so wird in jedem Fall durch die Federkraft der Druckfeder 39 das Rückschlagventil 30 schließen, da durch das Ventil ein Druckausgleich zwischen der Einlaßöffnung 34 und der Auslaßöffnung 35 des Rückschlagventils erfolgt. Bei Druckausgleich zwischen den beiden Öffnungen 34, 35 ist jedoch bedingt durch die Federkraft das Rückschlagventil 30 stets geschlossen. Sollte sich aufgrund unvorhergesehener Einflüsse ein hoher Gegendruck aufbauen, wobei das Rückschlagventil 30 eventuell noch nicht geschlossen hat, so wird ein sofortiges Schließen des Rückschlagventils durch die Öffnung 44 im Topfboden 38b des topfförmigen Teils 38 ermöglicht, da durch die Öffnung 44 das Medium in den Topf 38 strömen kann und das Stellglied 37 gegen den Ventilsitz 36 drückt, welcher durch die Stirnseite der Hülse 36 gebildet wird.

Es versteht sich von selbst, daß die erfindungsgemäße Lösung ebenso für sämtliche fremdgesteuerten Kosaxialvenitle zu verwenden ist. Das Rückschlagventil 30 gemäß der Figur 2 läßt sich zudem ohne weiteres in den Auslaßstutzen des Koaxialventils integrieren. Hierbei ist lediglich das Gehäuse 33 des Rückschlagventils zu entfernen und die Hülse 36 und das topfförmige Teil 38 samt Ventilsstellglied 37 und Feder 39 in den Auslaßstutzen zu integrieren.

### Bezugszeichenliste:

- 1: Koaxialventil
- 2: Einlaßstutzen
- 3: Auslaßstutzen
- 4: Stellglied (Steuerrohr)
- 5: Innenrohr
- 6: Magnetgehäuse
- 7: Zylinderspule (Solenoid)
- 8: Polkern
- 9: Magnetdeckel
- 10: Ventilsitz
- 11: Dichtungselement
- 12: Dichtungsscheibe
- 13: Dichtungsscheibe
- 14: Deckel
- 15: Ener-Seal Manschette
- 16: Schraub-Mutter-Befestigung
- 17: Druckfeder
- 18: Sockel
- 19: Anschlußgehäuse
- 20: Befestigungsschraube für Anschlußgehäuse
- 21: PG-Verschraubung
- 22: Rückschlagventil
- 23: Einlaßstutzen
- 24: Auslaßstutzen
- 25: Gehäuse
- 26: Einlaßöffnung
- 27: Auslaßöffnung
- 28: Hülse
- 36a: Konisch zusammenlaufende Innenwand der Hülse
- 37: Stellglied
- 38: Topf
- 38a: Zylinderwand des Topfes
- 38b: Topfboden
- 39: Druckfeder
- 40: Vorsprung (Führungssockel)
- 41: Öffnungen in der Zylinderwand des Topfes
- 42: Konischer Einlaß
- 43: Konvexer Vorsprung des Stellglieds
- 44: Öffnung im Topfboden
- 45: Gleit- und Dichtring
- P_{B}: Betriebsdruck (Durchflußrichtung des Mediums)
- P_{G}: Gegendruck (Sperrichtung)

## Patentansprüche

1. Koaxialventil (1) mit einem in axialer Richtung beweglich gelagerten Ventilstellglied (4), wobei eine elektrische Spule (7) das Ventilstellglied (4) mittels ihres Magnetfeldes verstellt oder das Ventilstellglied (4) pneumatisch oder mechanisch verstellt wird, **dadurch gekennzeichnet,** daß hinter oder in der Auslaßseite (3) des Koaxialventils (1) ein Rückschlagventil (30) angeordnet ist, welches in Richtung (P_{G}) des Koaxlialventils (1) sperrt.

2. Koaxialventil (1) nach Anspruch 1, **dadurch gekennzeichnet,** daß die Spule (7) eine Zylinderspule ist, und das Ventilstellglied (4) als Anker ausgebildet ist und in der Zylinderspule (7) zumindest teilweise einliegt.

3. Koaxialventil (1) nach Anspruch 2, **dadurch gekennzeichnet,** daß das Ventilstellglied (4) ein Rohr hat, durch das das Medium im Koaxialventil (1) strömt, wobei in der Ventilstellung 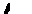 Geschlossen 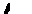 das Rohr mit seiner einen Stirnseite gegen einen Ventilsitz (10, 11) gedrückt ist, derart, daß das Medium nicht mehr zur Ventilauslaßseite (3) gelangen kann.

4. Koaxialventil (1) nach Anspruch 3, **dadurch gekennzeichnet,** daß bei stromloser Spule (7) das Koaxialventil (1) geöffnet ist, wobei eine Feder (17) das Ventilstellglied (4) von dem Ventilsitz (10, 11) wegdrückt, und bei stromführender Spule (7) bei Erreichen einer bestimmten Stromstärke in der Spule (7) das Ventilstellglied (4) entgegen der Federkraft abdichtend gegen den Ventilsitz (10, 11) drückt.

5. Koaxialventil (1) nach einem der vorherigen Ansprüche, **dadurch gekennzeichnet,** daR das Rückschlagventil (30) ein scheibenförmiges Ventilsstellglied (37) hat, das mittels einer Feder (39) entgegen der Durchflußrichtung (P_{B}) in Richtung der Koaxialventilauslaßseite (3) druckbeaufschlagt wird.

6. Koaxialventil (1) nach Anspruch 5, **dadurch gekennzeichnet,** daß der Ventilsitz des Rückschlagventils (30) eine zylinderförmige Hülse (36) ist, durch die das gesamte Medium strömt, und gegen deren eine Stirnseite das scheibenförmige Ventilstellglied (37) des Rückschlagventils (30) im Sperrzustand bzw. geschlossenen Zustand abdichtend anliegt.

7. Koaxialventil (1) nach Anspruch 6, **dadurch gekennzeichnet,** daß die zylinderförmige Hülse (36) außen von einem topfförmigen Teil (38, 38a) umfaßt ist, wobei das scheibenförmige Ventilstellglied (37) und die das Ventilstellglied (37) druckbeaufschlagende Feder (39) im topfförmigen Teil (38, 38a) angeordnet sind, wobei sich die Feder (39) mit ihrer einen Seite gegen den Topfboden (38b) abstützt und mit ihrer anderen Seite am Ventilstellglied (37) anliegt.

8. Koaxialventil (1) nach Anspruch 7, **dadurch gekennzeichnet,** daß das topfförmige Teil (38) an seinen zylindrischen Seitenwänden (38a) insbesondere schlitzförmige Öffnungen (41) hat, durch die das Medium von der zylinderförmigen Hülse (36) hin zum Rückschlagventilauslaß (32, 35) gelangt.

9. Koaxialventil (1) nach Anspruch 7 oder 8, **dadurch gekennzeichnet,** daß das scheibenförmige Ventilstellglied (37) an seiner der Hülse (36) zugewandten Seite (43) abgerundet insbesondere kugelförmig oder konvex ist, um das Medium seitlich zu den Öffnungen (41) des topfförmigen Teils (38) zu leiten.

10. Koaxialventil (1) nach einem der Ansprüche 7 bis 9, **dadurch gekennzeichnet,** daß das Ventilstellglied (37) an seiner der Feder (39) zugewandten Seite einen Vorsprung (40) hat, der von der zylinderförmigen Feder (39) umfaßt wird.

11. Koaxialventil (1) nach Anspruch 10, **dadurch gekennzeichnet,** daß die Feder (39) das Ventilstellglied (37) in axialer Richtung im topfförmigen Teil (38) führt und das Ventilstellglied (37) mit seiner schmalen Seite an der zylindrischen Innenwand des topfförmigen Teils (38) entlanggleitet.

12. Koaxialventil (1) nach einem der Ansprüche 7 bis 11, **dadurch gekennzeichnet,** daß im Topfboden (38b) mindestens eine Öffnung (44) ist, die die Rückschlagventilauslaßseite (32, 35) mit dem Ventilstellglied (37) verbindet.

13. Koaxialventil (1) nach einem der vorherigen Ansprüche, **dadurch gekennzeichnet,** daß das Rückschlagventil (30) in einem Gehäuse (33) mit Stutzen (31) angeordnet ist, wobei der Stutzen (31) an dem Auslaßstutzen des Koaxialventils befestigbar ist.
